# EUROPEAN PATENT SPECIFICATION

(11) **EP 1 715 744 B1**
(45) Date of publication and mention of the grant of the patent: **20.08.2008**
(21) Application number: 05708421.2
(22) Date of filing: 21.02.2005
(51) Int. Cl.: A01N 57/34, A01N 57/20

(54) **EMBEDDED BIOCIDE**
EINGEBETTETES BIOZID
BIOCIDE INTEGRE

(30) Priority: 20.02.2004 GB 0403773
(43) Date of publication of application: 02.11.2006
(73) Proprietor: Rhodia UK Limited, Watford, Hertfordshire WD24 4QP (GB)
(72) Inventor: JONES, Christopher, Raymond 110 Sutherland Road, South Staffordshire WS6 7BS (GB); DIAZ, Raul, Conroe, TX 77302 (US)
(74) Representative: Seugnet, Jean Louis
(86) International application number: PCT/GB2005/000640
(87) International publication number: WO 2005/079578

(56) References cited:
- EP-A- 0 215 562
- EP-A- 0 275 207
- EP-A- 1 036 498
- WO-A-01/94744
- WO-A-02/08127
- WO-A-99/17614

## Description

This invention relates to a phosphonium compound embedded in a matrix substrate, the use of such an embedded phosphonium compound and a method of using an embedded phosphonium compound.

Phosphonium compounds, such as THP (tris (hydroxymethyl) phosphine) salts, THP sulphate and THP chloride, are effective biocides and scale dissolvers that are widely used in water treatment and oil field applications for the control of micro-organisms and scale. Such micro-organisms include sulphate reducing bacteria, general heterotrophic bacteria and algae. These micro-organisms are responsible for scale formation in aqueous systems found in industry. Typically the scale comprises, iron carbonate or iron, lead and zinc sulphide deposits.

Phosphonium compounds are conventionally supplied as liquid based products, but solid forms of phosphonium compounds are commercially available. Solid forms typically comprise phosphonium compounds coated onto a solid, inert, substrate such as adipic acid.

WO-A-0194744 discloses polymeric material for (controlled) releasing chemicals in a fluid environment, whereby the polymeric material forms a matrix, from which the chemical, for example tetrakis hydroxymethyl phosphonium sulfate, is released by permeation.

Liquid based phosphonium compounds react or interfere with the performance of commonly used oxygen scavengers. For example, sulphite based scavengers and erythorbic acid, with the result being that complete deaeration of systems containing liquid based phosphonium compounds is difficult to achieve.

Accordingly, the present invention provides a phosphonium compound embedded in a matrix substrate wherein the phosphonium compound is selected from the group consisting of a THP⁺ salt (tetrakis (hydroxyorgano) phosphonium salt) or a condensate of THP and a nitrogen containing compound, and wherein the matrix substrate has a melting point of between 5 to 80° C and is soluble in water at a temperature of between 5 to 100° C, in which the matrix substrate is a polyethylene glycol with a molecular weight of above 600.

The present invention offers the following advantages:-
The embedded phosphonium compound can be used for applications that neither conventional liquid or solid forms of the phosphonium compound are suitable for;
With the phosphonium compound embedded in the matrix substrate, the resulting product can be dosed into system requiring deaeration, for example, oil field water injection systems and transmission pipelines during hydrostatic testing; without impacting upon the performance of the oxygen scavenger;
A delivery system for phosphonium compounds is provided that enables the phosphonium compound to be dosed into systems containing oxygen scavengers without incompatibility problems. This is not currently possible;
A delivery system for a phosphonium compound is provided that does not adversely affect the performance of the phosphonium compound or the overall treatment program used in aqueous systems;
A delivery system is provided whereby the rates of dissolution of the embedded phosphonium compound can be controlled by the matrix composition;
A delivery system is provided that minimises direct contact with the biocide;
A delivery system is provided which is deployable in areas of low expertise and an absence of mechanical equipment, for example, pumps;
A delivery system is provided that allows phosphonium compounds to be formulated with other treatment chemicals or enhancers that would normally be incompatible if initially combined with an aqueous solution.

Preferably the THP⁺ salt is tetrakis (hydroxymethyl) phosphonium sulphate. Alternatively, the THP⁺ salt is tetrakis (hydroxymethyl) phosphonium chloride, tetrakis (hydroxymethyl) phosphonium phosphate, tetrakis (hydroxymethyl) phosphonium formate, tetrakis (hydroxymethyl) phosphonium acetate or tetrakis (hydroxymethyl) phosphonium oxalate.

The nitrogen containing compound is preferably urea. Alternatively, it may be melamine, guanidine or dicyandiamide.

The matrix substrate has a melting point of between 5 to 80° C. Preferably the melting point is between 20 to 70°C. More preferably, the melting point is 60°C.

The matrix substrate is soluble in water at a temperature of between 5 to 100°C, especially 20°C.

The matrix substrate is a polyethylene glycol with a molecular weight of above 600. More preferably, the polyhydric compound is polyethylene glycol 8000.

The present invention also provides in a second aspect the use of a phosphonium compound as defined in the first aspect.

Preferably, the phosphonium compound is used to reduce the numbers of micro-organisms in industrial systems. Alternatively, the phosphonium compound is used to reduce iron carbonate or iron, lead and zinc scale deposits.

The industrial system is selected from the group consisting of storage vessels for water and fuel; fuel and gas pipelines; gas lift wells; water injection systems; oil or gas production wells; cooling tower aqueous systems; aqueous systems in paper production and the like and any other aqueous system where micro-organism contamination is a problem.

Preferably the micro-organism is selected from the group consisting of sulphate reducing bacteria, general heterotrophic bacteria and algae.

According to a third aspect, the present invention provides a method for reducing the numbers of micro-organisms in an industrial system which method comprises the step of contacting the industrial system with an effective amount of a phosphonium compound as defined in the first aspect of the invention to reduce the number of micro-organisms.

According to a fourth aspect, the present invention provides a method for reducing the amount of scale in an industrial system which method comprises the step of contacting the industrial system with an effective amount of a phosphonium compound as defined in the first aspect of the invention to reduce the amount of scale.

The phosphonium compound according to the first aspect may be formulated with one or more of the following: scale inhibitors, corrosion inhibitors, additional biocides, demulsifiers, gas hydrate inhibitors, asphaltene inhibitors/dispersants, other surfactants, anti-foams/defoamers, fragrances, wax inhibitors, scale dissolvers, gelling agents, oxygen scavengers.

The embedded biocide in accordance with the invention may be in the form of sticks/candles, beads, pellets, bricks, shavings, flakes or prills and the like.

An embodiment of the invention will now be described with reference to the following examples:

### Example 1

A polyethylene glycol with a weight average molecular weight of 8000 (PEG8000) is used to produce matrix substrate containing THPS, that has a melting point of approximately 50°C (suitable for storage in most areas of the world) and readily dissolving within 5 minutes in water at 20°C.

### Example 2

As shown in Table 1 below, THPS, embedded within a PEG8000 matrix, can be deployed in the presence of an oxygen scavenger without hindering the deaeration process. Experiment three shows complete deaeration within 15 seconds when an embedded biocide in accordance with the present invention is used, compared with no deaeration when a liquid biocide is used (Experiment 2).

### Example 3

The THPS/PEG8000 candle described above was tested in a standard quantitative suspension test to measure the antimicrobial activity of the embedded biocide. Such tests involve the addition of the biocide to the system water for a specified contact period, deactivation of the biocide after the specified contact period and subsequent enumeration of the remaining viable bacteria using Most Probable Number (MPN) techniques widely known within the industry.

From the graph below (Graph 1) it can be seen that THPS embedded in a PEG8000 matrix substrate (Tolcide® candle H2) has no adverse effects upon the antimicrobial performance of THPS when compared with liquid THPS (Tolcide® PS75).

The control shows the viability of the bacteria when not exposed to THPS.

**Table 1**

| **EXP** | **Description** | **Oxygen Scavenging Y/N** | **Time to reach zero O₂** | **Comments** |
|---|---|---|---|---|
| 1 | 500 ppm erythorbic acid (oxygen scavenger)in water :using15ppm catalyst-CuSO₄ | **Y** | 15 seconds | This confirms the deaerat ion efficacy of erythrobic acid- |
| 2 | Repeat of experiment 1 but 450ppm THPS was introduced via a conventional liquid product | **N** | Virtually no deaeration occurred even after 15 minutes ) | |
| 3 | Repeat of experiment 1 but 450 ppm THPS, encapsulated within a PEG8000 candle, was introduced . | **Y** | 15 seconds | Solid dissolved in ∼5 min |

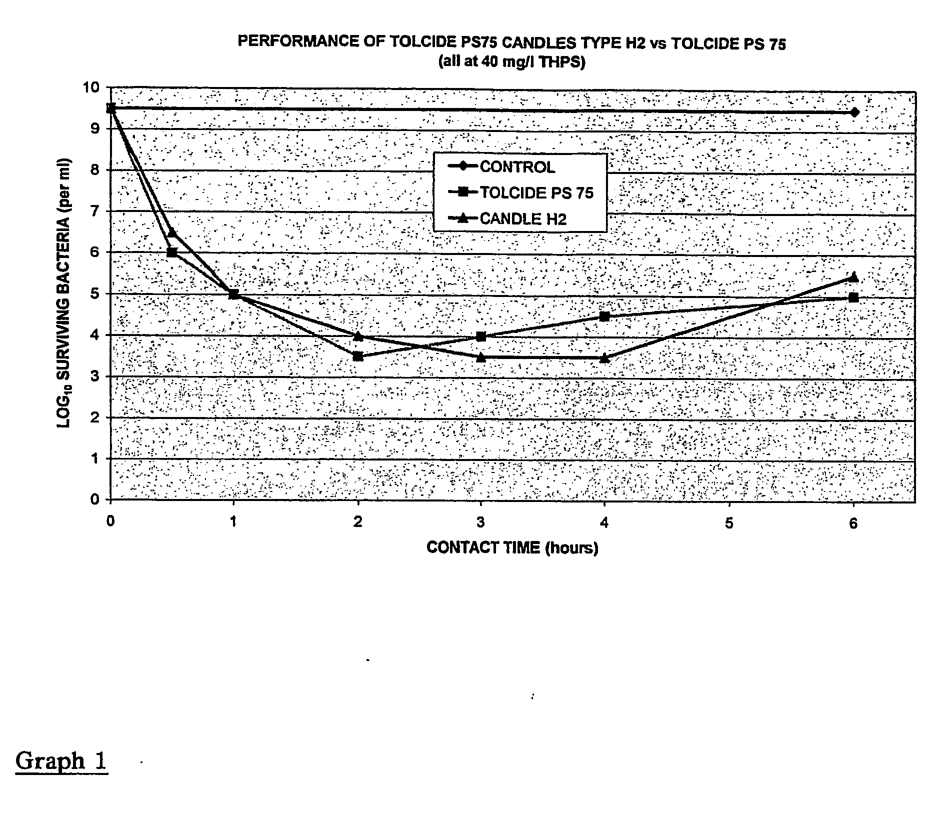

## Claims

1. A phosphonium compound embedded in a matrix substrate wherein the phosphonium compound is selected from a group consisting of a THP⁺ salt (tetrakis (hydroxyorgano) phosphonium salt) or a condensate of THP and a nitrogen containing compound, and wherein the matrix substrate has a melting point of between 5 to 80° C and is soluble in water at a temperature of between 5 to 100° C, in which the matrix substrate is a polyethylene glycol with a molecular weight of above 600.

2. A phosphonium compound as claimed in claim 1, in which the THP⁺ salt is tetrakis (hydroxymethyl) phosphonium sulphate.

3. A phosphonium compound as claimed in claim 1, in which the THP salt is selected from the group consisting of tetrakis (hydroxymethyl) phosphonium chloride, tetrakis (hydroxymethyl) phosphonium phosphate, tetrakis (hydroxymethyl) phosphonium formate, tetrakis (hydroxymethyl) phosphonium acetate and tetrakis (hydroxymethyl) phosphonium oxalate.

4. A phosphonium compound as claimed in any preceding claim, in which the nitrogen containing compound is urea.

5. A phosphonium compound as claimed in any one of claims 1 to 3, in which the nitrogen containing compound is melamine, guanidine or dicyandiamide.

6. A phosphonium compound as claimed in claim 1, in which the matrix substrate has a melting point of between 20 to 70° C.

7. A phosphonium compound as claimed in claim 6, in which the matrix substrate has a melting point of 60° C.

8. A phosphonium compound as claimed in claim 1, in which the matrix substrate is soluble in water at a temperature of 20° C.

9. A phosphonium compound as claimed in claim 1, in which the polyhydric compound is polyethylene glycol 8000.

10. The use of a phosphonium compound as defined in any one of claims 1 to 9.

11. The use of a phosphonium compound as defined in any one of claims 1 to 9 to reduce the numbers of micro-organisms in industrial systems.

12. The use of phosphonium compound as claimed in claim 11 in which the industrial system is selected from the group consisting of storage vessels for water and fuel; fuel and gas pipelines; gas lift wells; water injection systems; oil or gas production wells; cooling tower aqueous systems; aqueous systems in paper reduction and the like and any other aqueous systems where micro-organism contamination is a problem.

13. The use of phosphonium compound as claimed in claim 11, in which the micro-organism is selected from the group consisting of sulphate reducing bacteria, general heterotrophic bacteria and algae.

14. The use of a phosphonium compound as defined in any one of claims 1 to 9 to reduce iron carbonate or iron, lead and zinc scale deposits.

15. A method for reducing the numbers of micro-organisms in an industrial system which method comprises a step of contacting the industrial system with an effective amount of phosphonium compound as defined in any one of claims 1 to 9 to reduce the number of micro-organisms.

16. A method for reducing the amount of scale in an industrial system which method comprises the step of contacting the industrial system with an effective amount of a phosphonium compound defined in any one of claims 1 to 9 to reduce the amount of scale.

17. A phosphonium compound as claimed in any one of claims 1 to 9, in which said compound is formulated with one or more of the following: scale inhibitors, corrosion inhibitors, additional biocides, demulsifiers, gas hydrate inhibitors, asphaltene inhibitors/dispersants, other surfactants, anti-foams/defoamers, fragrances, wax inhibitors, scale dissolvers, gelling agents, oxygen scavengers.

18. A phosphonium compound as claimed in any one of claims 1 to 9, in which said compound is in the form of sticks/candles, beads, pellets, bricks, shavings, flakes or prills.

## Patentansprüche

1. Phosphoniumverbindung, eingebettet in ein Matrixsubstrat, wobei die Phosphoniumverbindung aus einer Gruppe ausgewählt ist, bestehend aus einem THP⁺-Salz (Tetrakis(hydroxyorgano)phosphoniumsalz) oder einem Kondensat von THP und einer Stickstoff enthaltenden Verbindung, und wobei das Matrixsubstrat einen Schmelzpunkt zwischen 5 und 80 °C hat und in Wasser bei einer Temperatur zwischen 5 und 100 °C löslich ist, wobei das Matrixsubstrat ein Polyethylenglycol mit einem Molekulargewicht von über 600 ist.

2. Phosphoniumverbindung nach Anspruch 1, wobei das THP⁺-Salz Tetrakis(hydroxymethyl)phosphoniumsulfat ist.

3. Phosphoniumverbindung nach Anspruch 1, wobei das THP-Salz aus der Gruppe ausgewählt ist, bestehend aus Tetrakis(hydroxymethyl)phosphoniumchlorid, Tetrakis(hydroxymethyl)phosphoniumphosphat, Tetrakis(hydroxymethyl)phosphoniumformiat, Tetrakis-(hydroxymethyl)phosphoniumacetat und Tetrakis(hydroxymethyl)phosphoniumoxalat.

4. Phosphoniumverbindung nach einem der vorhergehenden Ansprüche, wobei die Stickstoff enthaltende Verbindung Harnstoff ist.

5. Phosphoniumverbindung nach einem der Ansprüche 1 bis 3, wobei die Stickstoff enthaltende Verbindung Melamin, Guanidin oder Dicyandiamid ist.

6. Phosphoniumverbindung nach Anspruch 1, wobei das Matrixsubstrat einen Schmelzpunkt zwischen 20 und 70 °C hat.

7. Phosphoniumverbindung nach Anspruch 6, wobei das Matrixsubstrat einen Schmelzpunkt von 60 °C hat.

8. Phosphoniumverbindung nach Anspruch 1, wobei das Matrixsubstrat in Wasser bei einer Temperatur von 20 °C löslich ist.

9. Phosphoniumverbindung nach Anspruch 1, wobei die mehrere Hydroxylgruppen enthaltende Verbindung Polyethylenglycol 8000 ist.

10. Verwendung einer Phosphoniumverbindung, wie in einem der Ansprüche 1 bis 9 definiert.

11. Verwendung einer Phosphoniumverbindung, wie in einem der Ansprüche 1 bis 9 definiert, zur Verringerung der Anzahl an Mikroorganismen in industriellen Systemen.

12. Verwendung einer Phosphoniumverbindung nach Anspruch 11, wobei das industrielle System aus der Gruppe ausgewählt ist, bestehend aus Lagerbehältern für Wasser und Treibstoff; Treibstoff- und Gasleitungen; Bohrlöchern zur Förderung mittels Gaslift; Wasserein-spritzsystemen; Bohrlöchern für die Öl- oder Gasgewinnung; wässerigen Systemen für Kühltürme; wässerigen Systemen bei der Papierherstellung und dergleichen und jeglichen anderen wässerigen Systemen, bei denen die Verunreinigung durch Mikroorganismen ein Problem darstellt.

13. Verwendung einer Phosphoniumverbindung nach Anspruch 11, wobei der Mikroorganismus aus der Gruppe ausgewählt ist, bestehend aus desulfurierenden Bakterien, üblichen heterotrophen Bakterien und Algen.

14. Verwendung der Phosphoniumverbindung, wie in einem der Ansprüche 1 bis 9 definiert, zur Verringerung von Eisencarbonat- oder Eisen-, Blei- und Zinksinterablagerungen.

15. Verfahren zum Verringern der Anzahl an Mikroorganismen in einem industriellen System, wobei das Verfahren einen Schritt des Inkontaktbringens des industriellen Systems mit einer wirksamen Menge einer Phosphoniumverbindung, wie in einem der Ansprüche 1 bis 9 definiert, umfaßt, um die Anzahl an Mikroorganismen zu verringern.

16. Verfahren zum Verringern der Menge an Ablagerungen in einem industriellen System, wobei das Verfahren den Schritt des Inkontaktbringens des industriellen Systems mit einer wirksamen Menge einer Phosphoniumverbindung, wie in einem der Ansprüche 1 bis 9 definiert, umfaßt, um die Menge an Ablagerungen zu verringern.

17. Phosphoniumverbindung nach einem der Ansprüche 1 bis 9, wobei die Verbindung mit einem oder mehreren der folgenden formuliert ist: Ablagerungsinhibitoren, Korrosionsinhibitoren, weitere Biozide, Demulgatoren, Gashydratinhibitoren, Asphalteninhibitoren/Dispergiermittel, andere oberflächenaktive Mittel, Antischaummittel/Entschäumer, Duftstoffe, Wachsinhibitoren, Ablagerungslösungsmittel, Geliermittel, Sauerstoffänger.

18. Phosphoniumverbindung nach einem der Ansprüche 1 bis 9, wobei die Verbindung in Form von Stiften/Kerzen, Kügelchen, Pellets, Ziegeln, Spänen, Flocken oder Granulaten vorliegt.

## Revendications

1. Composé phosphonium intégré dans un substrat matriciel, le composé phosphonium étant choisi parmi un groupe constitué d'un sel de THP⁺ (sel de tétrakis-(hydroxyorgano)-phosphonium) ou d'un produit de condensation de THP et d'un composé azoté, et le substrat matriciel présentant un point de fusion compris entre 5 et 80°C étant soluble dans l'eau à une température comprise entre 5 et 100°C, où le substrat matriciel est un polyéthylène-glycol présentant un poids moléculaire supérieur à 600.

2. Composé phosphonium selon la revendication 1, dans lequel le sel de THP⁺ est le sulfate de tétrakis-(hydroxyméthyl)-phosphonium.

3. Composé phosphonium selon la revendication 1, dans lequel le sel de THP est choisi parmi le groupe constitué du chlorure de tétrakis-(hydroxyméthyl)-phosphonium, du phosphate de tétrakis-(hydroxyméthyl)-phosphonium, du formiate de tétrakis-(hydroxyméthyl)-phosphonium, de l'acétate de tétrakis-(hydroxyméthyl)-phosphonium et de l'oxalate de tétrakis-(hydroxyméthyl)-phosphonium.

4. Composé phosphonium selon l'une quelconque des revendications précédentes, dans lequel le composé azoté est l'urée.

5. Composé phosphonium selon l'une quelconque des revendications 1 à 3, dans lequel le composé azoté est la mélamine, la guanidine ou le dicyanodiamide.

6. Composé phosphonium selon la revendication 1, dans lequel le substrat matriciel présente un point de fusion compris entre 20 et 70°C.

7. Composé phosphonium selon la revendication 6, dans lequel le substrat matriciel présente un point de fusion de 60°C.

8. Composé phosphonium selon la revendication 1, dans lequel le substrat matriciel est soluble dans l'eau à une température de 20°C.

9. Composé phosphonium selon la revendication 1, dans lequel le composé polyhydrique est le polyéthylène-glycol 8000.

10. Utilisation d'un composé phosphonium tel que défini dans l'une quelconque des revendications 1 à 9.

11. Utilisation d'un composé phosphonium tel que défini dans l'une quelconque des revendications 1 à 9 en vue de réduire les nombres de micro-organismes dans des systèmes industriels.

12. Utilisation d'un composé phosphonium selon la revendication 11, dans laquelle le système industriel est choisi parmi le groupe constitué de cuves de stockage pour de l'eau et du combustible ; de pipelines de combustible et de gaz ; de puits d'extraction à injection de gaz ; de systèmes d'injection d'eau ; de puits de protection de pétrole ou de gaz ; de systèmes aqueux de tour de refroidissement ; de systèmes aqueux dans la réduction du papier et similaires, et tout autre système aqueux dans lequel une contamination par des micro-organismes est un problème.

13. Utilisation d'un composé phosphonium selon la revendication 11, dans laquelle le micro-organisme est choisi parmi le groupe constitué de bactéries réductrices de sulfates, de bactéries hétérotrophiques générales et d'algues.

14. Utilisation d'un composé phosphonium tel que défini dans l'une quelconque des revendications 1 à 9 en vue de réduire le carbonate de fer ou les dépôts de tartre de fer, de plomb et de zinc.

15. Procédé de réduction des nombres de micro-organismes dans un système industriel, lequel procédé comprend une étape de mise en contact du système industriel avec une quantité efficace d'un composé phosphonium tel que défini dans l'une quelconque des revendications 1 à 9, en vue de réduire le nombre de micro-organismes.

16. Procédé de réduction de la quantité de tartre dans un système industriel, lequel procédé comprend l'étape de mise en contact du système industriel avec une quantité efficace d'un composé phosphonium défini dans l'une quelconque des revendications 1 à 9, en vue de réduire la quantité de tartre.

17. Composé phosphonium selon l'une quelconque des revendications 1 à 9, ledit composé étant formulé avec l'un ou plusieurs parmi les agents suivants : des inhibiteurs de tartre, des inhibiteurs de la corrosion, des biocides supplémentaires, des agents désémulsifiants, des inhibiteurs d'hydrate de gaz, des inhibiteurs/agents dispersants d'asphaltène, d'autres agents tensioactifs, des agents anti-mousse/démoussants, des parfums, des inhibiteurs de cire, des agents de dissolution de tartre, des agents gélifiants, des piégeurs d'oxygène.

18. Composé phosphonium selon l'une quelconque des revendications 1 à 9, ledit composé étant sous la forme de bâtons/bougies, de billes, de pastilles, de briques, de copeaux, de flocons ou de pépites.
